# EUROPEAN PATENT APPLICATION

(11) **EP 4 523 966 A2**
(43) Date of publication of application: **19.03.2025**
(21) Application number: 24200773.0
(22) Date of filing: 17.09.2024
(51) Int. Cl.: B60Q 1/26, F21S 43/15, F21S 43/19

(54) **BENDABLE LIGHT DEVICE**

(30) Priority: 18.09.2023 TW 112135551
(71) Applicant: Juluen Enterprise Co., Ltd., New Taipei City 236 (TW)
(72) Inventor: Yen, Shuo-Ying, 236 New Taipei City (TW); Pan, Sheng-Ming, 236 New Taipei City (TW)
(74) Representative: Straus, Alexander

(57) **Abstract**

A bendable light device for a vehicle, the bendable light device is provided and includes a light kit (2). The light kit (2) includes at least one light assembly. The at least one light assembly includes at least one first light assembly (21). The at least one first light assembly (21) includes a first light base (21A), a first light cover (215) mounted on the first light base (21A), and a first light emitting module (23A) disposed between the first light base (21A) and the first light cover (215).

## Description

### Field of the Invention

The present invention relates to a bendable light device according to the pre-characterizing clause of claim 1.

### Background of the Invention

With development of the transportation industry, there are various vehicles available in the markets. For example, there are emergency vehicles, such as ambulances, fire trucks, and police cars, used by emergency services. The emergency vehicles typically have warning lights that warn people on the road to give way to the emergency vehicles for allowing the emergency vehicles to perform their tasks efficiently.

However, a conventional warning light is usually fixed onto a vehicle body by a bracket. It not only takes time to mount a light on a bracket but also probably requires different brackets for mounting the light according to a shape or a size of the surface of the vehicle body. Therefore, an improvement is urgently needed.

### Summary of the Invention

This is mind, the present invention aims at providing a bendable light device which can be easily attached onto a surface of a vehicle body of a vehicle without any gap therebetween.

This is achieved by a bendable light device according to claim 1. The dependent claims pertain to corresponding further developments and improvements.

As will be seen more clearly from the detailed description following below, the claimed bendable light device includes a light kit. The light kit includes at least one light assembly. The at least one light assembly includes at least one first light assembly. The at least one first light assembly includes a first light base, a first light cover mounted on the first light base, and a first light emitting module disposed between the first light base and the first light cover.

In summary, the bendable light device of the present invention can be easily attached onto the surface of the vehicle body of the vehicle without any gap therebetween.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the accompanying drawings. Thereof:
FIG. 1 and FIG. 2 are schematic diagrams of a bendable light device at different views according to a first embodiment of the present invention,
FIG. 3 is an exploded diagram of the bendable light device according to the first embodiment of the present invention,
FIG. 4 is an exploded diagram of a first light assembly according to the first embodiment of the present invention,
FIG. 5 is an exploded diagram of a second light assembly according to the first embodiment of the present invention,
FIG. 6 is another exploded diagram of the bendable light device according to the first embodiment of the present invention,
FIG. 7 and FIG. 8 are partial internal structural diagrams of the first light assembly as a movable back plate is located at different positions according to the first embodiment of the present invention,
FIG. 9 is a schematic diagram of a bendable light device according to a second embodiment of the present invention,
FIG. 10 is a schematic diagram of a bendable light device according to a third embodiment of the present invention,
FIG. 11 is an exploded diagram of a first light emitting module according to a fourth embodiment of the present invention,
FIG. 12 is a partial functional block diagram of a first light assembly according to the fourth embodiment of the present invention,
FIG. 13 and FIG. 14 are diagrams of the first light emitting module in different orientations according to the fourth embodiment of the present invention, and
FIG. 15 and FIG. 16 are schematic diagrams of a bendable light device at different views according to a fifth embodiment of the present invention.

### Detailed Description

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "left", "right", "front", "back", etc., is used with reference to the orientation of the Figure(s) being described. The components of the present invention can be positioned in a number of different orientations. As such, the directional terminology is used for purposes of illustration and is in no way limiting. Accordingly, the drawings and descriptions will be regarded as illustrative in nature and not as restrictive. Also, if not specified, the term "connect" is intended to mean either an indirect or direct electrical/mechanical connection. Thus, if a first device is coupled to a second device, that connection may be through a direct electrical/mechanical connection, or through an indirect electrical/mechanical connection via other devices and connections.

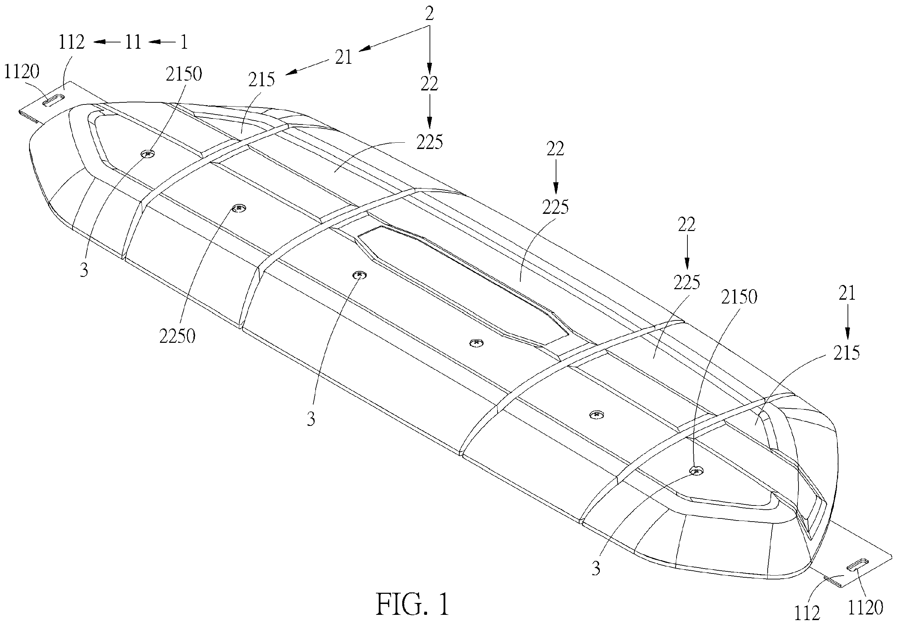

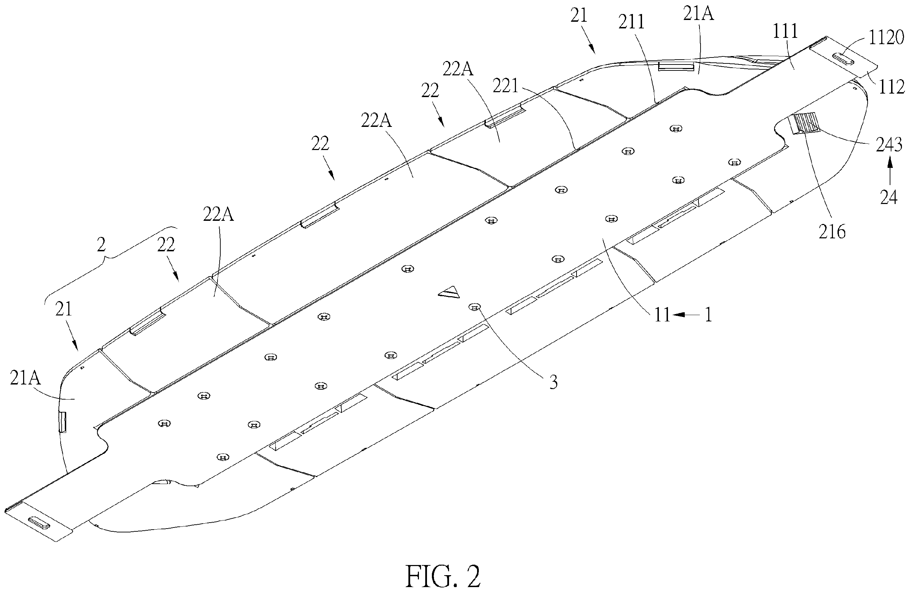

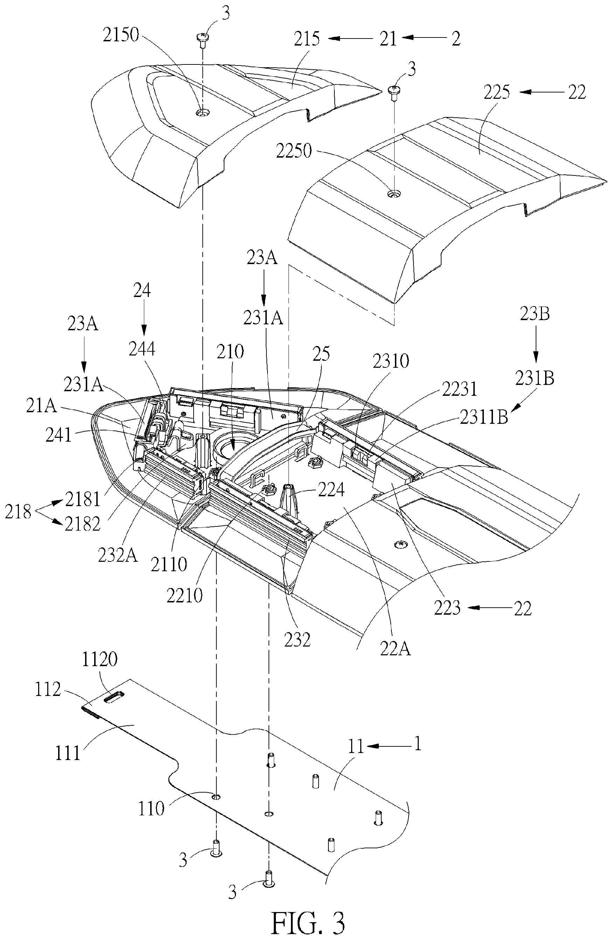

Please refer to FIG. 1 to FIG. 3. FIG. 1 and FIG. 2 are schematic diagrams of a bendable light device at different views according to a first embodiment of the present invention. FIG. 3 is an exploded diagram of the bendable light device according to the first embodiment of the present invention. As shown in FIG. 1 to FIG. 3, the bendable light device is designed for a vehicle, e.g., an ambulance, a fire truck or a police car, and the bendable light device includes a bendable mounting plate 1. The bendable mounting plate 1 includes a main body portion 11 and two lateral positioning portions 111 extending from two lateral sides of the main body portion 11 and protruding beyond two lateral sides of the light kit 2. A plurality of mounting holes 110 are formed on the main body portion 11. The lateral positioning portion 111 includes a combining end 112 for combining with an engaging component, e.g., an engaging hook, disposed on the vehicle body of the vehicle. The bendable mounting plate 1 can be bent to be attached onto a surface of a vehicle body of the vehicle and fitted with a curve of the surface of the vehicle body of the vehicle, so as to attach the bendable light device onto the surface of the vehicle body of the vehicle without any gap therebetween. For example, the vehicle body can be a shell or a supporting bracket of the vehicle. In this embodiment, the bendable mounting plate 1 can be a one-piece structure made of flexible or deformable material, and the lateral positioning portion 111 can be a strap-shaped structure having a combining hole 1120 formed on the combining end 112 thereof for engaging with the engaging component disposed on the vehicle body of the vehicle. However, the present invention is not limited to this embodiment.

Furthermore, the bendable light device further includes a light kit 2 assembled with the bendable mounting plate 1. In this embodiment, the light kit 2 includes two first light assemblies 21 respectively located adjacent to the two lateral sides of the main body portion 11 and three second light assemblies 22 disposed between the two first light assemblies 21. However, the numbers of the first light assembly and the second light assembly are not limited to this embodiment. For example, in another embodiment, the light kit can include two first light assemblies respectively located adjacent to the two lateral sides of the main body portion and one second light assembly disposed between the two first light assemblies. Alternatively, in another embodiment, the light kit can include one first light assembly extended between the two lateral sides of the main body portion.

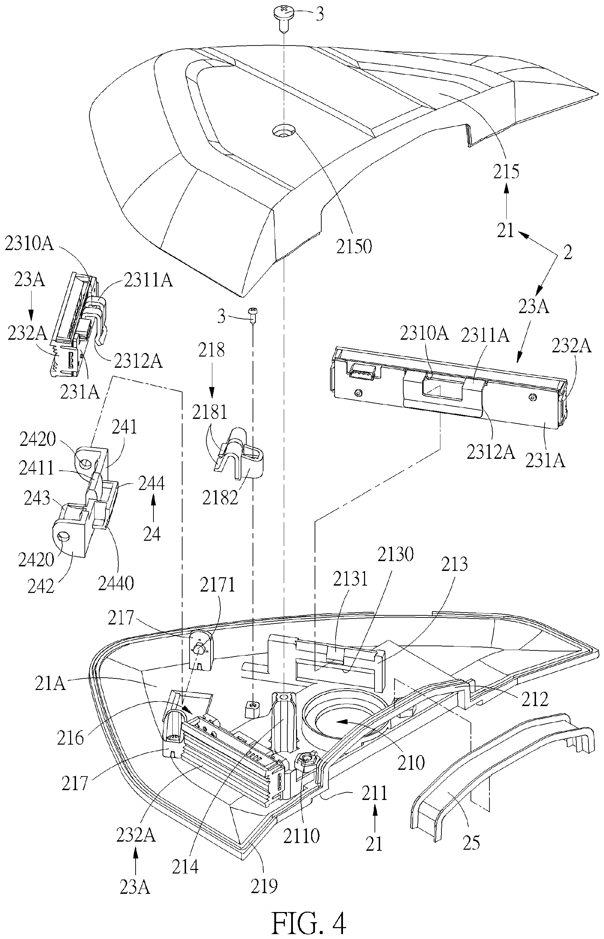

Please refer to FIG. 1 to FIG. 4. FIG. 4 is an exploded diagram of the first light assembly 21 according to the first embodiment of the present invention. As shown in FIG. 1 to FIG. 4, the first light assembly 21 includes a first light base 21A, a first light cover 215 and a plurality of first light emitting modules 23A. A first assembling portion 211 is formed on an outer side of the first light base 21A and for assembling with the main body portion 11 of the bendable mounting plate 1. The first assembling portion 211 can be a receiving recess portion for receiving the main body portion 11 of the bendable mounting plate 1. The first light cover 215 is mounted on the first light base 21A. The first light emitting module 23A is disposed between the first light base 21A and the first light cover 215.

Specifically, in this embodiment, a plurality of first threaded holes 2110 are formed on the first assembling portion 211 for allowing a plurality of threaded fasteners 3 to be fastened thereon. A plurality of through holes 210 are formed on the first light base 21A. A first edge 212 protrudes from an interface of an inner side of the first light base 21A near the adjacent second light assembly 22, and the first edge 212 is bent upwardly.

The first light assembly 21 further includes a plurality of first back plates 213 disposed on the inner side of the first light base 21A for mounting the corresponding first light emitting modules 23A and a movable back plate 24 movably disposed on the inner side of the first light base 21A and for mounting the other first light emitting module 23A. At least one first threaded boss 214 is arranged on the inner side of the first light base 21A. At least one first fastening hole 2150 is arranged on the first light cover 215. The first light cover 215 is mounted on the first light base 21A by the corresponding threaded fastener 3 passing through the first fastening hole 2150 and fastened on the first threaded boss 214.

However, the numbers and the arrangements of the first light module and the first back plate are not limited to this embodiment. It depends on practical demands.

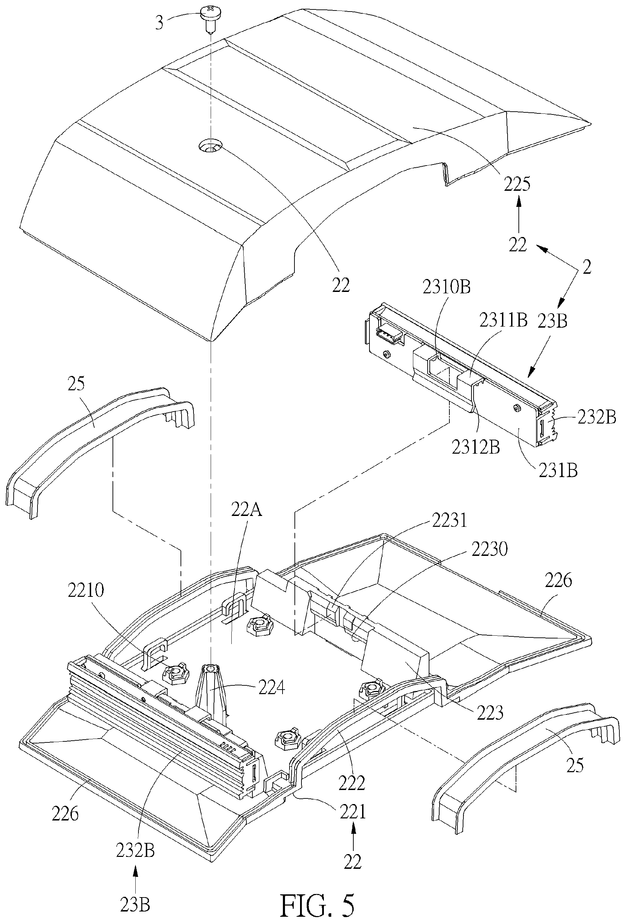

Please refer to FIG. 1 to FIG. 3 and FIG. 5. FIG. 5 is an exploded diagram of the second light assembly 22 according to the first embodiment of the present invention. As shown in FIG. 1 to FIG. 3 and FIG. 5, the second light assembly 22 includes a second light base 22A, a second light cover 225 and a plurality of second light emitting modules 23B. A second assembling portion 221 is formed on an outer side of the second light base 22A and for assembling with the main body portion 11 of the bendable mounting plate 1. The second assembling portion 221 can be a receiving recess portion for receiving the main body portion 11 of the bendable mounting plate 1. The second light cover 225 is mounted on the second light base 22A. The second light emitting module 23B is disposed between the second light base 22A and the second light cover 225.

Specifically, in this embodiment, a plurality of second threaded holes 2210 are formed on the second assembling portion 221 for allowing the threaded fasteners 3 to be fastened thereon. A second edge 222 protrudes from each of two interfaces of an inner side of the second light base 22A near the adjacent first light assembly 21 or the adjacent second light assembly 22, and the second edge 222is bent upwardly. The second light assembly 22 further includes a plurality of second back plates 223 disposed on the inner side of the second light base 22A for mounting the second light emitting modules 23B. At least one second threaded boss 224 is arranged on the inner side of the second light base 22A. At least one second fastening hole 2250 is arranged on the second light cover 225. The second light cover 225 is mounted on the second light base 22A by the corresponding threaded fastener 3 passing through the second fastening hole 2250 and fastened on the second threaded boss 224.

However, the numbers and the arrangements of the second light module and the second back plate are not limited to this embodiment. It depends on practical demands.

In addition, the light kit 2 further includes a plurality of sealing blocks 25 for preventing liquid leakage through a gap between the first light cover 215 and the first light base 21A caused by the bent bendable mounting plate 1 to avoid liquid damage of the first light assembly 21 and preventing liquid leakage through a gap between the second light cover 225 and the second light base 22A caused by the bent bendable mounting plate 1 to avoid liquid damage of the second light assembly 22. For example, one of the sealing blocks 25 can be disposed between the first edge 212 and the first light cover 215 and between the second edge 222 and the second light cover 225, and another one of the sealing blocks 25 can be disposed between the two second edges 222 and the two second light covers 225. Preferably, the sealing block 25 can be made of flexible or deformable material. However, the present invention is not limited to this embodiment. For example, in another embodiment, the light kit can include two first light assemblies and one sealing block disposed between the two first edges and the two first light covers. Alternatively, in another embodiment, the light kit can include one first light assembly and one sealing block disposed between the first edge and the first light cover.

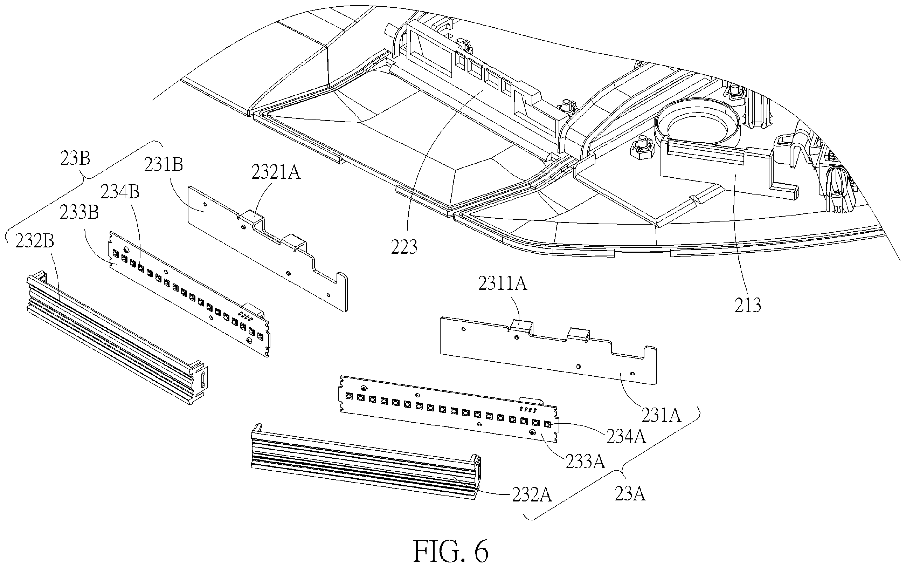

Please refer to FIG. 4 to FIG. 6. FIG. 6 is another exploded diagram of the bendable light device according to the first embodiment of the present invention. As shown in FIG. 4 to FIG. 6, a first positioning block 2131 protrudes from the first back plate 213, and a second positioning block 2231 protrudes from the second back plate 223. A first positioning recess 2130 is formed on the first back plate 213 and located beneath the first positioning block 2131, and a second positioning recess 2230 is formed on the second back plate 223 and located beneath the second positioning block 2231. The first light emitting module 23A includes a first assembling plate 231A, a first covering component 232A, a first circuit board 233A assembled with a side of the first assembling plate 231A, and at least one first light emitting component 234A disposed on the first circuit board 233A. The first covering component 232A is assembled with the side of the first assembling plate 231A for covering the first circuit board 233A and the first light emitting component 234A. A first positioning resilient plate 2311A extends from another side of the first assembling plate 231A and is bent downwardly and obliquely. A first accommodating slot 2310A is formed on the first positioning resilient plate 2311A and for accommodating the first positioning block 2131, and a first positioning portion 2312A is disposed on the first positioning resilient plate 2311A and located beneath the first accommodating slot 2310A and configured to engage with the first positioning recess 2130 by passing over the first positioning block 2131.

The second light emitting module 23B includes a second assembling plate 231B, a second covering component 232B, a second circuit board 233B assembled with a side of the second assembling plate 231B, and at least one second light emitting component 234B disposed on the second circuit board 233B. The second covering component 232B is assembled with the side of the second assembling plate 231B for covering the second circuit board 233B and the second light emitting component 234B. A second positioning resilient plate 2311B extends from another side of the second assembling plate 231B and is bent downwardly and obliquely. A second accommodating slot 2310B is formed on the second positioning resilient plate 2311B and for accommodating the second positioning block 2231, and a second positioning portion 2312B is disposed on the second positioning resilient plate 2311B and located beneath the second accommodating slot 2310B and configured to engage with the second positioning recess 2230 by passing over the second positioning block 2231.

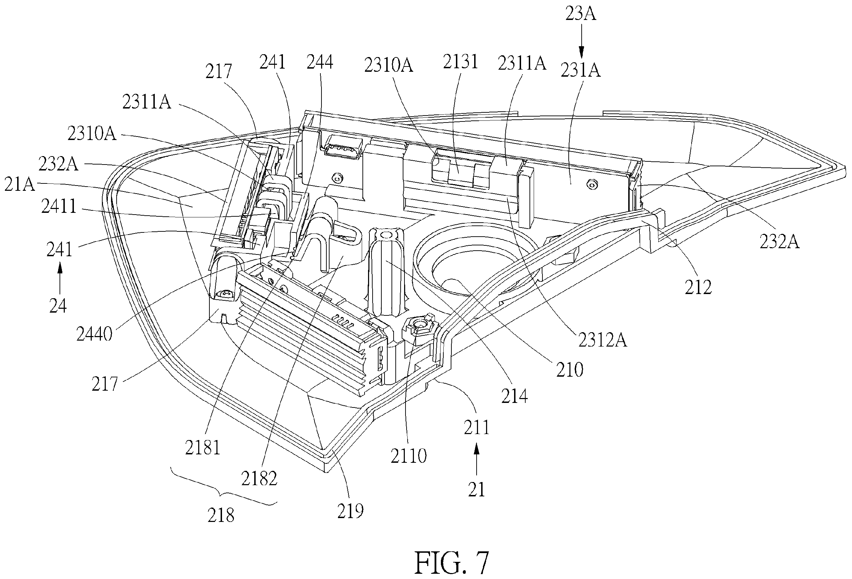

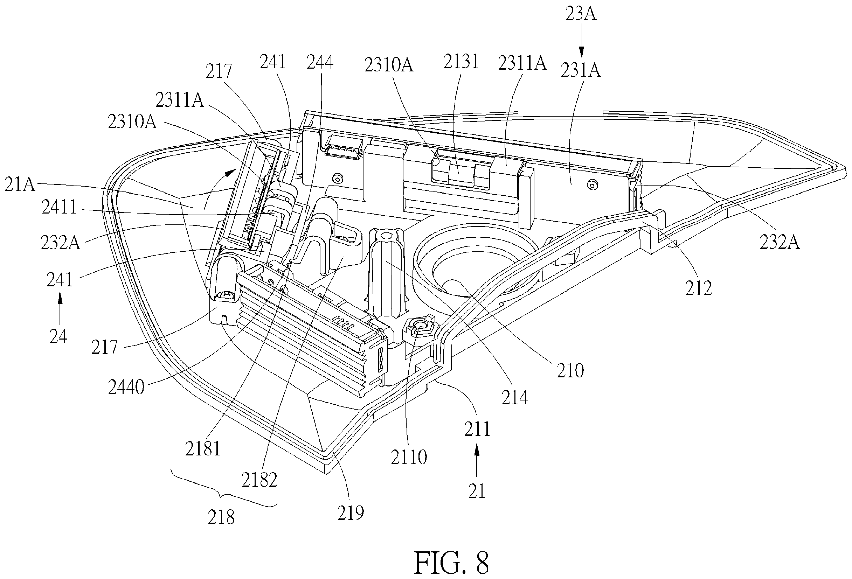

Please refer to FIG. 4, FIG. 7 and FIG. 8. FIG. 7 and FIG. 8 are partial internal structural diagrams of the first light assembly 21 as the movable back plate 24 is located at different positions according to the first embodiment of the present invention. As shown in FIG. 4, FIG. 7 and FIG. 8, an adjusting opening 216 is formed on the first light base 21A. Two positioning columns 217 are disposed on the inner side of the first light base 21A. The two positioning columns 217 are located beside the adjusting opening 216 and opposite to each other. The movable back plate 24 includes a base portion 241 located between the two positioning columns 217 and two mounting portions 242 extending from two lateral sides of the base portion 241 and respectively assembled with the two positioning columns 217. An adjusting hole 2420 is formed on each of the two mounting portions 242. An adjusting block 2171 protrudes from each of the two positioning columns 217 and passes through the adjusting hole 2420. A base plate 243 extends from a bottom side of the base portion 241 and is located above the adjusting opening 216. A mounting block 2411 protrudes from the base portion 241 and for mounting the first light emitting module 23A. A retaining portion 244 is disposed on a side of the mounting block 2411. A plurality of adjusting grooves 2440 are disposed on the retaining portion 244. A stopping component 218 is disposed on the first light base 21A and located adjacent to the retaining portion 244. The stopping component 218 includes an abutting portion 2181 and a positioning portion 2182. The abutting portion 2181 is bent downwardly and for abutting against one of the plurality of adjusting grooves 2440. The positioning portion 2182 is for positioning the stopping component 218 onto the first light base 21A.

Furthermore, as shown in FIG. 6 and FIG. 7, when it is desired to adjust an orientation of the first light emitting module 23A in a vertical direction, the base plate 243 can be operated via the adjusting opening 216 for adjusting an inclined angle of the movable back plate 24 to adjust an emission angle of the first light emitting module 23A, and the abutting portion 2181 of the stopping component 218 can engage with the corresponding adjusting groove 2440 for locking the movable back plate 24 at a desired inclined angle.

Preferably, in order to achieve easy assembly and heat dissipation of the first light emitting module 23A and the second light emitting module 23B, the first assembling plate 231A and the second assembling plate 231B can be made of metal material for enhancing heat dissipation performance.

Besides, when it is desired to assemble the bendable light device, the first light base 21A of each of the first light assemblies 21 can be assembled with the main body portion 11 of the bendable mounting plate 1 by the threaded fasteners 3 passing through the mounting holes 110 and fastened on the first threaded holes 2110, and the second light base 22A of each of the second light assemblies 22 can be assembled with the main body portion 11 of the bendable mounting plate 1 by the threaded fasteners 3 passing through the mounting holes 110 and fastened on the second threaded holes 2210. Preferably, the two first light bases 21A can be located adjacent to the two lateral sides of the main body portion 11 of the bendable mounting plate 1, respectively, and the second light bases 22A are located between the two first light bases 21A. Then, the sealing block 25 can be mounted on the corresponding first edge 212 and/or the corresponding second edge 222. Afterwards, the first light cover 215 of each of the first light assemblies 21 can be mounted on the corresponding first light base 21A by the corresponding threaded fastener 3 passing through the first fastening hole 2150 and fastened on the first threaded boss 214, so as to clamp the corresponding sealing block 25 and a first sealing border 219, which is disposed on and protrudes from an outer periphery of the first light base 21A, by the corresponding first light cover 215 and the corresponding first edge 212, and the second light cover 225 of each of the second light assemblies 22 can be mounted on the corresponding second light base 22A by the corresponding threaded fastener 3 passing through the second fastening hole 2250 and fastened on the second threaded boss 224, so as to clamp the corresponding sealing block 25 and a second sealing border 226, which is disposed on and protrudes from an outer periphery of the second light base 22A, by the corresponding second light cover 225 and the corresponding second edge 222.

When it is desired to attach the bendable light device onto the surface of the vehicle body of the vehicle, the combining portions 112 can be operated to engage the combining holes 1120 with the engaging components disposed on the vehicle body of the vehicle, such that the bendable mounting plate 1 can be bent to be attached onto the surface of the vehicle body of the vehicle and fitted with a curve of the surface of the vehicle body of the vehicle, so as to achieve the bendable light device to be attached onto the surface of the vehicle body of the vehicle without any gap therebetween.

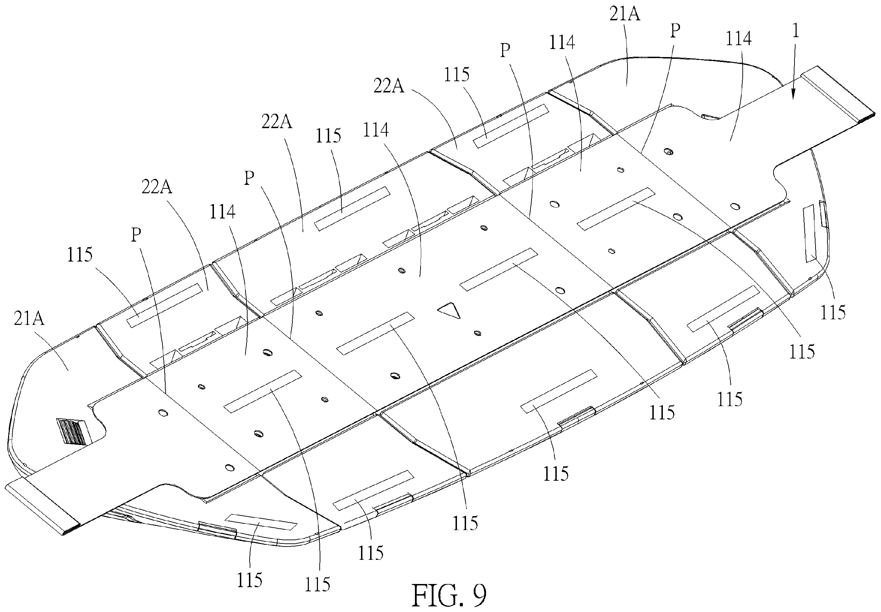

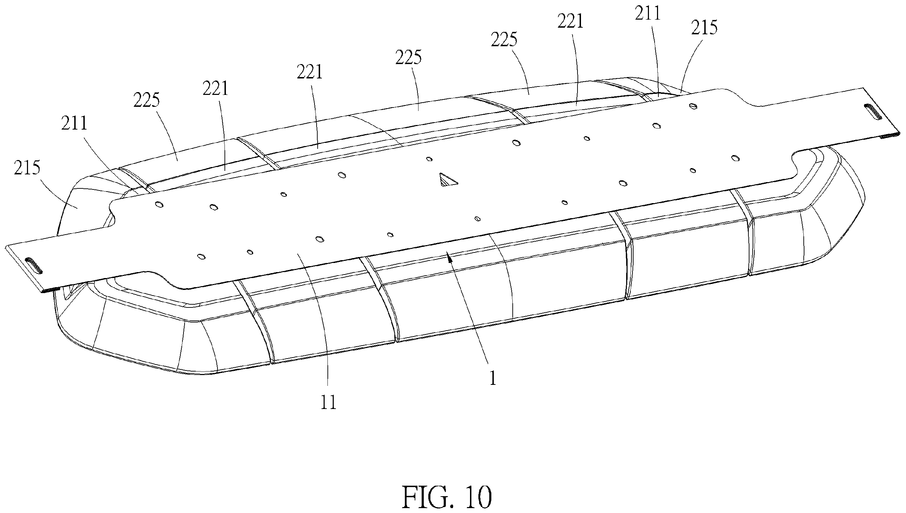

However, the present invention is not limited to this embodiment. Please refer to FIG. 9 and FIG. 10. FIG. 9 is a schematic diagram of a bendable light device according to a second embodiment of the present invention. FIG. 10 is a schematic diagram of a bendable light device according to a third embodiment of the present invention. As shown in FIG. 9, in the second embodiment, different from the first embodiment, the bendable mounting plate 1 can include a plurality of plate-shaped segments 114 pivotally connected to each other by pivoting joints P, e.g., shafts or rubber strip, such that the bendable mounting plate 1 is bendable by relative pivotal movements of the plurality of plate-shaped segments 114 to be attached onto the surface of the vehicle body of the vehicle and fitted with the curve of the surface of the vehicle body of the vehicle. Besides, in the second embodiment, the bendable light device has no combining hole and further includes at least one attaching component 115 disposed on at least one of the first light base 21A, the second light base 22A and the bendable mounting plate 1. The attaching component 115 can be a permanent magnet or a double-sided adhesive film for adhesively or magnetically attaching the bendable mounting plate 1 onto the surface of the vehicle body of the vehicle. Other details of the second embodiment are identical to the ones of the first embodiment. Detailed description is omitted herein for simplicity. As shown in FIG. 10, in the third embodiment, different from the first embodiment, the first assembling portion 211 can be formed on an outer side of the first light cover 215, and the second assembling portion 221 can be formed on an outer side of the second light cover 225, i.e., the main body portion 11 of the bendable mounting plate 1 is assembled with the first light cover 215 and the second light cover 225 instead of the first light base 21A and the second light base 22A. Other details of the third embodiment are identical to the ones of the first embodiment. Detailed description is omitted herein for simplicity.

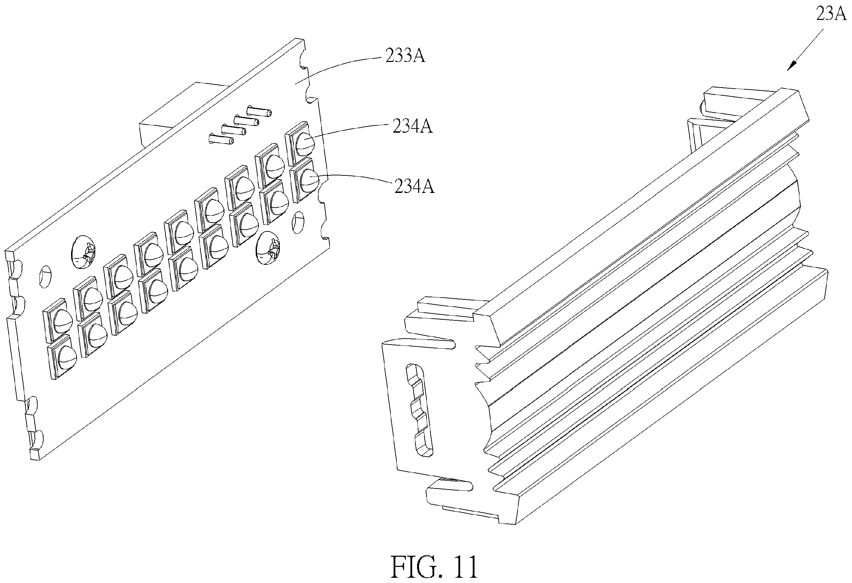

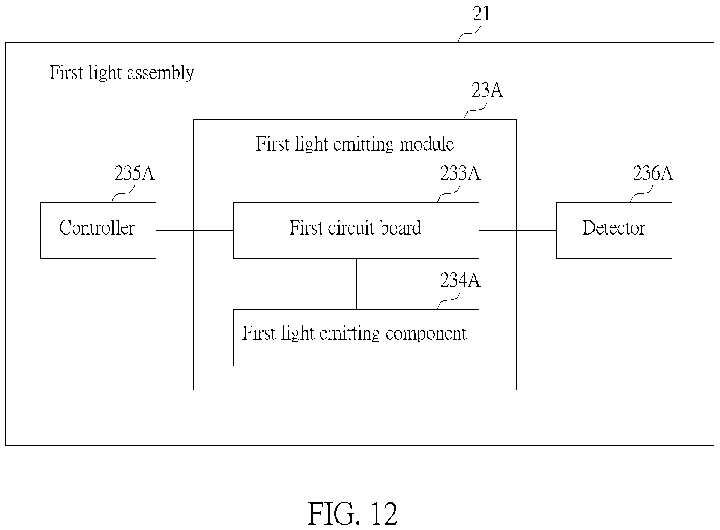

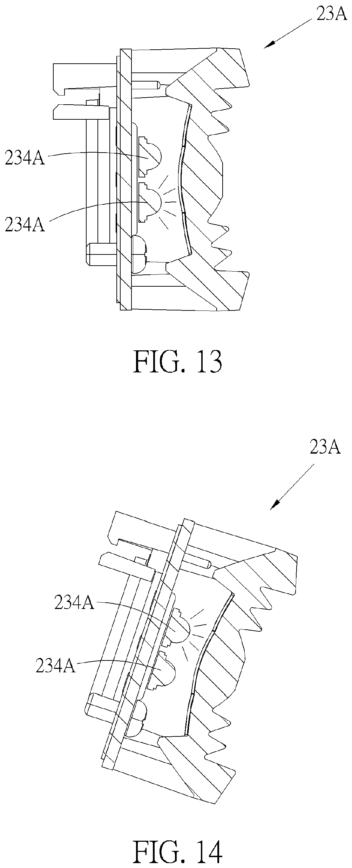

Please refer to FIG. 11 to FIG. 14. FIG. 11 is an exploded diagram of the first light emitting module 23A according to a fourth embodiment of the present invention. FIG. 12 is a partial functional block diagram of the first light assembly 21 according to the fourth embodiment of the present invention. FIG. 13 and FIG. 14 are diagrams of the first light emitting module 23A in different orientations according to the fourth embodiment of the present invention. As shown in FIG. 11 to FIG. 14, in the fourth embodiment, different from the first embodiment, the first light assembly 21 further includes a controller 235A electrically connected to the first light emitting module 23A and a detector 236A electrically connected to the controller 235A. The detector 236A is configured to detect an orientation of the first light emitting module 23A in a vertical direction, and the controller 235A is configured to control one of the plurality of first light emitting components 234A to emit light according to the orientation of the first light emitting module 23A in the vertical direction detected by the detector 236A, so as to ensure a proper emission angle of the first light emitting module 23A. The controller 235A can be a processor or a circuit board mounted on the first circuit board 233A and electrically connected to the first light emitting component 234A via the first circuit board 233A.

The detector 236A can be a tilt sensor mounted on the first circuit board 233A and electrically connected to the controller 235A via the first circuit board 233A. For example, when the detector 236A detects the first light emitting module 23A is in an orientation as shown in FIG. 13, e.g., a horizontal orientation, the controller 235A can control the lower first light emitting components 234A to emit light, and when the detector 236A detects the first light emitting module 23A is in an orientation as shown in FIG. 14, e.g., an obliquely downward orientation, the controller 235A can control the upper first light emitting components 234A to emit light. Other details of the fourth embodiment are identical to the ones of the first embodiment. Detailed description is omitted herein for simplicity. Besides, in this embodiment, both of the automatic light emission adjusting mechanism having the detector and the controller and the manual light emission adjusting mechanism including the movable back plate and the stopping component can be utilized. Understandably, in another embodiment, when the automatic light emission adjusting mechanism having the detector and the controller is utilized, the manual light emission adjusting mechanism including the movable back plate and the stopping component can be omitted.

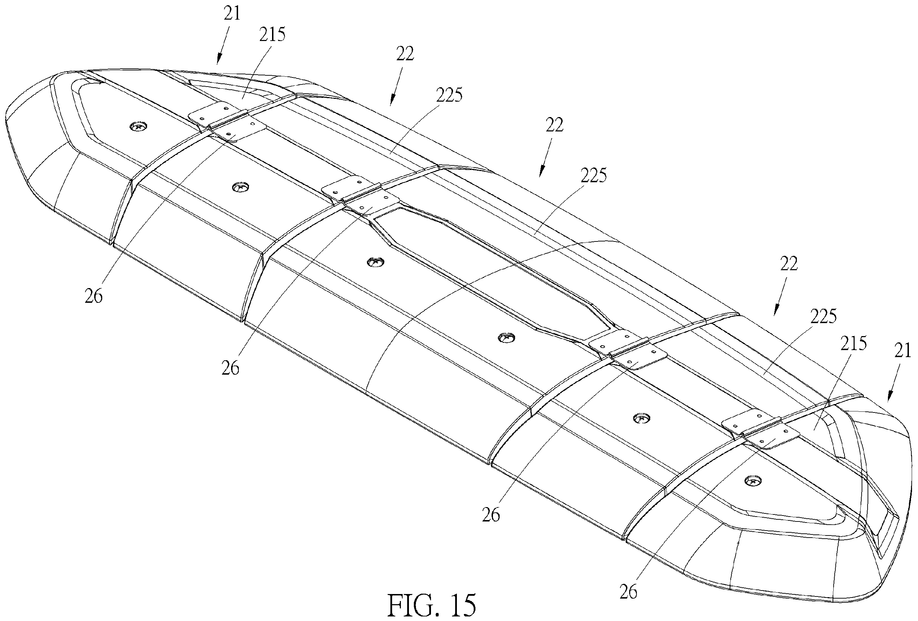

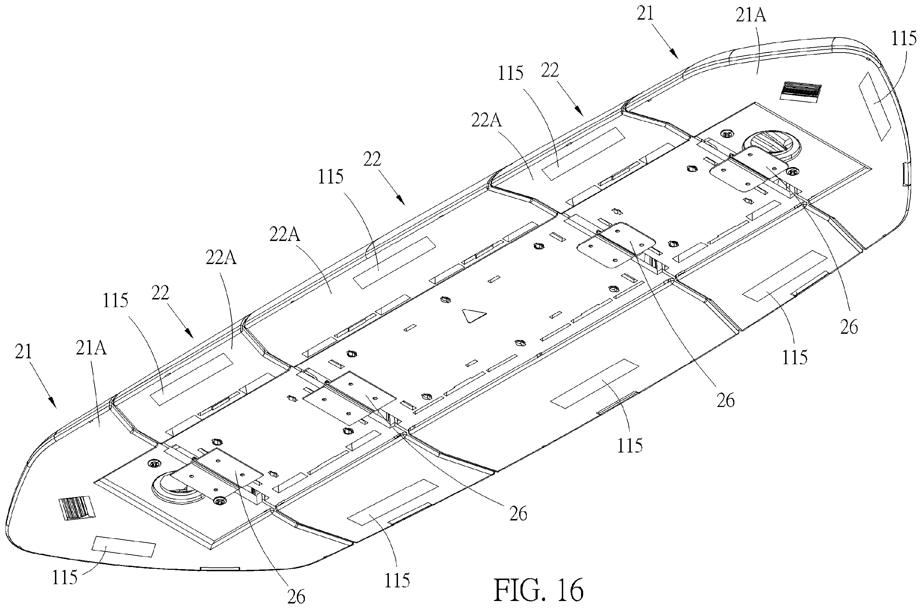

Please refer to FIG. 15 and FIG. 16. FIG. 15 and FIG. 16 are schematic diagrams of a bendable light device at different views according to a fifth embodiment of the present invention. As shown in FIG. 15 and FIG. 16, in the fifth embodiment, different from the first embodiment, the bendable light device has no bendable mounting plate and further includes a plurality of hinges 26. The hinge 26 is configured to pivotally connect the first light assembly 21 to the adjacent second light assembly 22 or pivotally connect the two adjacent second light assemblies 22.

In this embodiment, in order to achieve a pivotal connection of the first light assembly 21 and the adjacent second light assembly 22, the first light base 21A and the adjacent second light base 22A can be pivotally connected to each other by the corresponding hinge 26, and the first light cover 215 and the adjacent second light cover 225 can be pivotally connected to each other by the corresponding hinge 26. Besides, in order to achieve a pivotal connection of the two adjacent second light assemblies 22, the two adjacent second light bases 22A can be pivotally connected to each other by the corresponding hinge 26, and the two adjacent second light covers 225 can be pivotally connected to each other by the corresponding hinge 26. However, the present invention is not limited to this embodiment. For example, in another embodiment, there can be only upper hinges for pivotally connecting the light covers or only lower hinges for pivotally connecting the light bases.

Besides, in this embodiment, the bendable light device includes at least one attaching component 115, which can be a permanent magnet or a double-sided adhesive film, disposed on at least one of the first light base 21A and the second light base 22A for adhesively or magnetically attaching the bendable mounting plate 1 onto the surface of the vehicle body of the vehicle.

Other details of the fifth embodiment are identical to the ones of the first embodiment. Detailed description is omitted herein for simplicity.

Furthermore, understandably, in another embodiment, when the bendable light device has no bendable mounting plate, the two adjacent light bases can be connected to each other, e.g., by a rubber strip, and the two adjacent light covers can be connected to each other, e.g., by another rubber strip. Alternatively, in another embodiment, when the bendable light device has no bendable mounting plate, the two adjacent light bases can be integrally connected to each other without any hinge, and the two adjacent light covers can be integrally connected to each other without any hinge, wherein each of the light bases and the light covers can be made of flexible or deformable material.

In contrast to the prior art, the bendable light device of the present invention can be easily attached onto the surface of the vehicle body of the vehicle without any gap therebetween.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A bendable light device for a vehicle, the bendable light device **characterized by**:
a light kit (2) comprising at least one light assembly comprising:
at least one first light assembly (21) comprising:
a first light base (21A);
a first light cover (215) mounted on the first light base (21A); and
a first light emitting module (23A) disposed between the first light base (21A) and the first light cover (215).

2. The bendable light device of claim 1, further **characterized by** a bendable mounting plate (1) comprising a main body portion (11), a first assembling portion (211) being formed on a side of one of the first light base (21A) and the first light cover (215) and for assembling with the main body portion (11) of the bendable mounting plate (1), and the bendable mounting plate (1) being bent to be attached onto a surface of a vehicle body of the vehicle to attach the bendable light device onto the surface of the vehicle body of the vehicle.

3. The bendable light device of claim 2, **characterized in that** the bendable mounting plate (1) further comprises two lateral positioning portions (111) extending from two lateral sides of the main body portion (11) and protruding beyond the light kit (2), and each of the two lateral positioning portions (111) comprises a combining end (112) for combining with an engaging component disposed on the vehicle body of the vehicle.

4. The bendable light device of claim 3, **characterized in that** a combining hole (1120) is formed on of the combining end (112) and for engaging with the engaging component.

5. The bendable light device of claim 2, further **characterized by** at least one attaching component (115) for adhesively or magnetically attaching the bendable mounting plate (1) onto the surface of the vehicle body of the vehicle.

6. The bendable light device of any of claims 2 to 5, **characterized in that** the bendable mounting plate (1) is a one-piece structure made of flexible or deformable material.

7. The bendable light device of any of claims 2 to 5, **characterized in that** the bendable mounting plate (1) comprises a plurality of plate-shaped segments (114) pivotally connected to each other.

8. The bendable light device of claim 1, **characterized in that** the at least one light assemblies comprises a plurality of light assemblies pivotally connected to each other.

9. The bendable light device of claim 8, further **characterized by** at least one attaching component (115) for adhesively or magnetically attaching the first light base (21A) onto the surface of the vehicle body of the vehicle.

10. The bendable light device of any of claims 1 to 8, **characterized in that** the at least one first light assembly (21) further comprises a first back plate (213) disposed on another side of the first light base (21A) for mounting the first light emitting module (23A), a first positioning block (2131) protrudes from the first back plate (213), a first positioning recess (2130) is formed on the first back plate (213) and located beneath the first positioning block (2131), the first light emitting module (23A) comprises a first assembling plate (231A), a first circuit board (233A) assembled with a side of the first assembling plate (231A) and at least one first light emitting component (234A) disposed on the first circuit board (233A), a first positioning resilient plate (2311A) extends from another side of the first assembling plate (231A) and is bent downwardly and obliquely, a first accommodating slot (2310A) is formed on the first positioning resilient plate (2311A) and for accommodating the first positioning block (2131), and a first positioning portion (2312A) is disposed on the first positioning resilient plate (2311A) and located beneath the first accommodating slot (2310A) and configured to engage with the first positioning recess (2130) by passing over the first positioning block (2131).

11. The bendable light device of any of claims 1 to 10, **characterized in that** the at least one first light assembly (21) further comprises a movable back plate (24) movably disposed on the first light base (21A) and for mounting the first light emitting module (23A), such that an orientation of the first light emitting module (23A) in a vertical direction is adjustable by movement of the movable back plate (24).

12. The bendable light device of claim 11, **characterized in that** an adjusting opening (216) is formed on the first light base (21A), two positioning columns (217) are disposed on another side of the first light base (21A), the two positioning columns (217) are located beside the adjusting opening (216) and opposite to each other, the movable back plate (24) comprises a base portion (241) located between the two positioning columns (217) and two mounting portions (242) extending from two lateral sides of the base portion (241) and respectively assembled with the two positioning columns (217), a base plate (243) extends from a bottom side of the base portion (241) and is located above the adjusting opening (216), and a mounting block (2411) protrudes from the base portion (241) and for mounting the first light emitting module (23A).

13. The bendable light device of claim 12, **characterized in that** a retaining portion (244) is disposed on a side of the mounting block (2411), a plurality of adjusting grooves (2440) are disposed on the retaining portion (244), a stopping component (218) is disposed on the first light base (21A) and located adjacent to the retaining portion (244), the stopping component (218) comprises an abutting portion (2181) and a positioning portion (2182), the abutting portion (2181) is bent downwardly and for abutting against one of the plurality of adjusting grooves (2440), the positioning portion (2182) is for positioning the stopping component (218) onto the first light base (21A), an adjusting hole (2420) is formed on each of the two mounting portions (242), and an adjusting block (2171) protrudes from each of the two positioning columns (217) and passes through the adjusting hole (2420).

14. The bendable light device of any of claims 1 to 13, **characterized in that** the at least one first light assembly (21) further comprises a controller (235A) electrically connected to the first light emitting module (23A) and a detector (236A) electrically connected to the controller (235A), the detector (236A) is configured to detect an orientation of the first light emitting module (23A) in a vertical direction, and the controller (235A) is configured to control one of a plurality of light emitting components (234A) to emit light according to the orientation of the first light emitting module (23A) in the vertical direction detected by the detector (236A).

15. The bendable light device of any of claim 1 to 14, **characterized in that** the light kit (2) further comprises a sealing block (25), a first edge (212) protrudes from another side of the first light base (21A) and is bent upwardly, and the sealing block (25) is disposed between the first edge (212) and the first light cover (215), and a first sealing border (219) is disposed on and protrudes from an outer periphery of the first light base (21A).
